# FASCICULE DE BREVET EUROPEEN

(11) **EP 0 539 310 B1**
(45) Date de publication et mention de la délivrance du brevet: **05.06.1996**
(21) Numéro de dépôt: 92470027.1
(22) Date de dépôt: 19.10.1992
(51) Int. Cl.: B01D 17/02

(54) **Séparateur à graisses**
Fettabscheider
Grease separator

(30) Priorité: 25.10.1991 FR 9113208
(43) Date de publication de la demande: 28.04.1993
(73) Titulaire: PONT-A-MOUSSON S.A., F-54000 Nancy (FR)
(72) Inventeur: Bialek, Jean-Pierre, F-77400 Lagny sur Marne (FR); Bienfait, Bernard, F-54000 Nancy (FR)
(74) Mandataire: Puit, Thierry

(56) Documents cités:
- DE-B- 2 026 236
- US-A- 1 927 410
- US-A- 2 433 087
- US-A- 2 588 863
- US-A- 2 745 551

## Description

La présente invention est relative à un séparateur à graisses du type comprenant une cuve qui délimite deux compartiments successifs, respectivement débourbeur et séparateur, séparés par une cloison transversale.

Un séparateur à graisses, végétales ou animales, est un appareil, généralement adaptable au niveau du sol au moyen de rehausses télescopiques, destiné à débarrasser l'eau issue d'une collectivité de ses matières lourdes et légères, afin de rejeter à l'égout une eau satisfaisant aux règlements sanitaires en vigueur. Les règlements sanitaires comportent en effet des prescriptions d'ordre général auxquelles doivent se conformer toutes les installations d'évacuation d'eaux résiduaires.

Il est connu d'utiliser des séparateurs à graisses constitués de deux compartiments respectivement débourbeur ou décanteur permettant le dépôt des matières lourdes, et séparateur permettant de débarrasser l'eau des graisses et des particules légères.

L'eau résiduaire issue par exemple d'un restaurant ou d'une cuisine collective pénètre par un conduit d'entrée dans le compartiment débourbeur, où elle est défléchie au moyen d'un déflecteur. Dans un premier temps, les matières lourdes descendent vers le fond du débourbeur. L'effluent déchargé de ses matières lourdes passe ensuite dans le compartiment séparateur par débordement au-dessus de la cloison de séparation des deux compartiments, puis est défléchi vers le bas par un second déflecteur. Ce compartiment étant quasiment au repos, les matières légères et les graisses remontent à la surface et surnagent d'une eau partiellement clarifiée. L'évacuation de cette eau vers l'égout s'effectue à partir d'un point bas du compartiment séparateur par un conduit plongeant dans ledit compartiment.

La vidange de tels séparateurs, lorsqu'ils sont saturés, s'effectue par pompage au moyen d'un tuyau de vidange plongeant dans le compartiment débourbeur.

Dans un séparateur à graisses du type précité, décrit dans le FR-A-2 626 782 au nom de la Demanderesse, la cloison qui sépare les deux compartiments est une plaque verticale dont la position longitudinale définit à la fois le volume du compartiment débourbeur et l'aire de surface libre de rassemblement des graisses du compartiment séparateur.

Or, les différents liquides que l'on doit traiter d'une collectivité à l'autre ont des teneurs différentes en matières lourdes et légères, ce qui rend relativement peu commode l'adaptation de l'appareil à chaque application particulière, puisque le volume de débourbage et l'aire de rassemblement des graisses sont liés.

L'invention a pour but de permettre un réglage indépendant des deux paramètres de fonctionnement que sont d'une part le volume de débourbage et d'autre part l'aire de rassemblement des graisses.

A cet effet, l'invention a pour objet un séparateur de graisses du type précité, caractérisé en ce que la cloison est montée dans la cuve de façon amovible et comprend une partie supérieure sensiblement verticale et une partie inférieure décalée longitudinalement par rapport à la partie supérieure, permettant ainsi, selon les teneurs en matières lourdes et légères du liquide à traiter, de choisir une cloison dont la forme définit le volume de débourbage et l'aire de rassemblement des graisses optimaux.

Suivant d'autres caractéristiques:
- la partie inférieure de la cloison est sensiblement verticale ;
- la partie inférieure de la cloison est décalée longitudinalement vers l'aval par rapport à la partie supérieure de cette cloison;
- un voile de liaison à peu près horizontal relie les deux parties de la cloison, ce qui confère à celle-ci une forme générale en S;
- le séparateur comprend un déflecteur transversal oblique situé dans le compartiment séparateur, en regard du bord supérieur de la cloison et dont le bord supérieur se trouve, dans le sens longitudinal, entre les deux parties de la cloison;
- la cuve contient un organe chauffant disposé dans le compartiment séparateur, au niveau de la partie supérieure du déflecteur;
- la cuve est alimentée en liquide à traiter à travers une ouverture d'entrée de forme rectangulaire aplatie dont l'aire est nettement supérieure à celle du tuyau d'alimentation qui lui est raccordé;
- le compartiment débourbeur est dépourvu de déflecteur en regard de l'ouverture d'entrée;
- la cuve est équipée d'un couvercle qui s'applique, éventuellement par l'intermédiaire d'une rehausse télescopique, sur la tranche supérieure des parois de la cuve, avec interposition d'un joint d'étanchéité, ce couvercle comportant une trappe au droit de chaque compartiment.

Des exemples de réalisation de l'invention vont maintenant être décrits en regard des dessins annexés, sur lesquels :
- la Figure 1 est une vue en coupe longitudinale verticale d'un séparateur de graisses conforme à l'invention;
- la Figure 2 est une vue partielle de dessus de ce séparateur, le couvercle étant retiré;
- la Figure 3 est une vue analogue à la Figure 2 d'une variante; et
- la Figure 4 est une vue partielle prise suivant la flèche IV de la Figure 3.

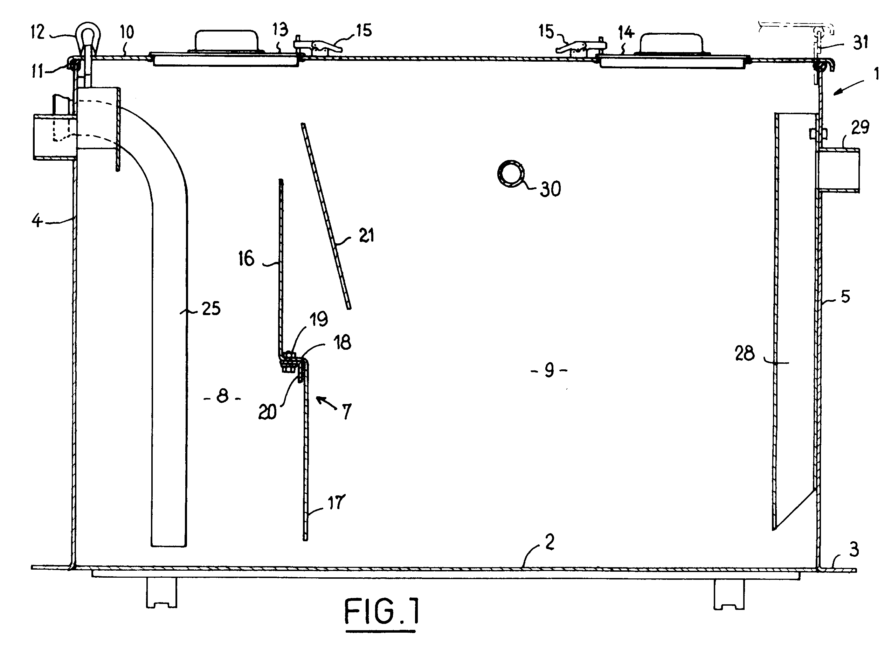

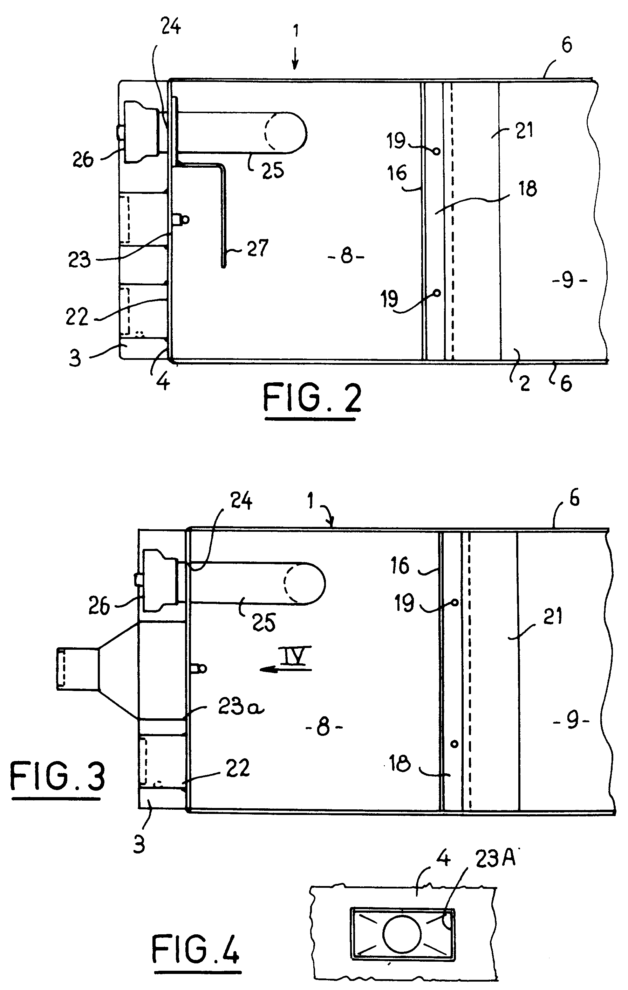

Le séparateur de graisses représenté aux Figures 1 et 2 comprend une cuve parallélépipédique 1 dont le fond 2 se prolonge en une semelle 3 de fixation sur une fondation appropriée (non représentée). La cuve comporte une paroi amont 4, une paroi aval 5 et deux parois latérales 6, les parois 4 à 6 étant verticales.

La cuve 1 est divisée par une cloison transversale 7 en deux compartiments : un compartiment amont 8, débourbeur ou décanteur, et un compartiment aval 9 de séparation des graisses. Elle est en outre munie d'un couvercle 10 dont le bord s'applique, avec interposition d'un joint d'étanchéité continu 11, sur la tranche supérieure des parois 4 à 6. Ce couvercle peut être fixé en place de manière amovible au moyen d'organes de fixation 12, dont l'un est représenté sur la Figure 1, et il comporte au droit de chaque compartiment 8, 9 une trappe respective 13, 14 verrouillable au moyen d'un levier de verrouillage 15.

La cloison 7, qui s'étend vers le bas jusqu'à une petite distance du fond 2, a une forme générale en S, avec une partie supérieure verticale 16, une partie inférieure verticale 17 décalée vers l'aval par rapport à la partie 16, et un voile horizontal intermédiaire 18 reliant les deux parties. Le voile 18 est fixé de façon amovible, au moyen de boulons 19, sur une cornière horizontale 20 fixée par ses extrémités aux parois latérales 6 de la cuve.

A la cloison 7 est associé un déflecteur transversal 21 de forme rectangulaire fixé par ses bords verticaux opposés aux parois 6. Ce déflecteur est disposé obliquement, avec son bord horizontal supérieur situé à l'aplomb du voile 18 et à un niveau supérieur à celui du bord supérieur de la cloison 7, et son bord horizontal inférieur situé en aval de la partie 17 et au niveau de la moitié inférieure de la partie 16.

La cuve 1 est également équipée, dans la paroi amont 4, de trois ouvertures circulaires, à savoir, d'une paroi 6 à l'autre : une ouverture 22 de ventilation, une ouverture médiane 23 d'alimentation en liquide à traiter, et un orifice 24 de vidange, chacun de ces orifices se prolongeant, à l'extérieur de la cuve, en un embout cylindrique de raccordement à une tuyauterie appropriée (non représentée).

Un tuyau de vidange coudé 25, plongeant dans le compartiment 8 presque jusqu'au fond 2, est relié par son extrémité supérieure à l'ouverture 24, dont l'embout peut être obturé par un chapeau étanche amovible 26. De plus, un déflecteur 27 solidaire de la paroi 4 et parallèle à celle-ci est disposé devant l'ouverture 23, à une certaine distance de cette ouverture.

Sur la paroi aval 5 de la cuve est fixé un tuyau vertical 28 ouvert à ses deux extrémités. Son extrémité inférieure, biseautée, est voisine du fond 2, mais se trouve à un niveau supérieur à celui que les boues atteignent dans le compartiment 9, tandis que son extrémité supérieure se trouve à un niveau supérieur celui du bord supérieur du déflecteur 21. Une tubulure de sortie 29 traversant la paroi 5 débouche dans la partie supérieure du tuyau 28.

La cuve est encore équipée, au niveau de la partie supérieure du déflecteur 21, d'une tige transversale 30, s'étendant d'une paroi 6 à l'autre, contenant des éléments chauffants.

Si nécessaire lors de l'installation du séparateur, une rehausse télescopique 31, s'emboîtant sur le joint 11 et elle-même munie d'un joint d'étanchéité continu sur son bord supérieur, peut être interposée à joint étanche entre le bord supérieur des parois 4 à 6 et le couvercle 10, comme indiqué en traits mixtes sur la Figure 1. Ceci permet d'amener dans tous les cas le couvercle 10 au niveau du sol.

En fonctionnement, l'eau à traiter, chargée d'impuretés lourdes et de graisses légères, pénètre dans la cuve 1 par l'ouverture 23, heurte le déflecteur 27 et descend dans le compartiment 8, où elle se décante des impuretés lourdes, lesquelles se rassemblent sur le fond 2 et s'accumulent dans le compartiment 8. L'eau et les graisses débordent au-dessus de la cloison 7 et pénètrent dans le compartiment 9 après déflexion vers le bas par le déflecteur 21. Dans le compartiment 9, qui est quasiment au repos, les graisses surnagent, une décantation complémentaire se produit, et l'eau partiellement clarifiée s'évacue à l'égout via le tuyau 28 et la tubulure 29.

Grâce à la forme en S de la cloison 7, on peut définir indépendamment l'un de l'autre le volume du compartiment de débourbage 8 et l'aire de la surface libre du compartiment de séparation 9, cette dernière étant définie uniquement par la position longitudinale de la partie supérieure 16 de la cloison.

La tige chauffante 30 permet de faire fondre une couche de graisse figée en vue de la vidange de la cuve.

La variante des Figures 3 et 4 ne diffère de l'appareil décrit ci-dessus que par la configuration de l'ouverture d'entrée 23A. Celle-ci est en effet rectangulaire, de forme aplatie, avec une aire nettement supérieure, notamment à peu près quatre fois supérieure, à celle du tuyau d'alimentation de l'appareil. L'embout d'alimentation a par conséquent une forme cylindrique, puis évasée, puis parallélépipédique.

On a constaté qu'avec une telle ouverture d'alimentation, on pouvait supprimer le déflecteur 27, et également réduire la longueur de l'appareil ainsi que le temps de traitement.

Il est à noter que le caractère démontable de la cloison 7 et la forme droite des parois de la cuve jusqu'à leur bord supérieur rendent aisées les opérations de grenaillage et de peinture que l'on a à effectuer dans la cuve. En outre, le caractère démontable de la cloison 7 permet, avec une cuve standard, de choisir, dans chaque application concrète, une cloison ayant la forme qui définit le volume de débourbage et l'aire de rassemblement des graisses optimaux.

De plus, la conception du couvercle 10 à deux trappes 13, 14 espacées l'une de l'autre permet de donner à la cuve n'importe quelles dimensions longitudinale et transversale désirées.

## Revendications

1. Séparateur à graisses, du type comprenant une cuve (1) qui délimite deux compartiments successifs (8, 9), respectivement débourbeur et séparateur, séparés par une cloison transversale (7), caractérisé en ce que la cloison (7) est montée dans la cuve (1) de façon amovible et comprend une partie supérieure (16) sensiblement verticale et une partie inférieure (17) décalée longitudinalement par rapport à la partie supérieure (16), permettant ainsi, selon les teneurs en matières lourdes et légères du liquide à traiter, de choisir une cloison (7) dont la forme définit le volume de débourbage et l'aire de rassemblement des graisses optimaux.

2. Séparateur suivant la revendication 1, caractérisé en ce que la partie inférieure (17) de la cloison est sensiblement verticale.

3. Séparateur suivant la revendication 1 ou 2, caractérisé en ce que la partie inférieure (17) de la cloison (7) est décalée longitudinalement vers l'aval par rapport à la partie supérieure (16) de cette cloison.

4. Séparateur suivant l'une quelconque des revendications 1 à 3, caractérisé en ce qu'un voile de liaison (18) à peu près horizontal relie les deux parties (16, 17) de la cloison (7), ce qui confère à celle-ci une forme générale en S.

5. Séparateur suivant l'une quelconque des revendications 1 à 4, caractérisé en ce qu'il comprend un déflecteur transversal oblique (21) situé dans le compartiment séparateur (9), en regard du bord supérieur de la cloison (7), et dont le bord supérieur se trouve, dans le sens longitudinal, entre les deux parties (16, 17) de la cloison (7).

6. Séparateur suivant la revendication 5, caractérisé en ce que la cuve (1) contient un organe chauffant (30) disposé dans le compartiment séparateur (9), au niveau de la partie supérieure du déflecteur (21).

7. Séparateur, notamment suivant l'une quelconque des revendications 1 à 6, caractérisé en ce que la cuve (1) est alimentée en liquide à traiter à travers une ouverture d'entrée (23A) de forme rectangulaire aplatie dont l'aire est nettement supérieure à celle du tuyau d'alimentation qui lui est raccordé.

8. Séparateur suivant la revendication 7, caractérisé en ce que le compartiment débourbeur (8) est dépourvu de déflecteur en regard de l'ouverture d'entrée (23A).

9. Séparateur suivant l'une quelconque des revendications 1 à 8, caractérisé en ce que la cuve est équipée d'un couvercle (10) qui s'applique, éventuellement par l'intermédiaire d'une rehausse télescopique (31) sur la tranche supérieure des parois (4 à 6) de la cuve, avec interposition d'un joint d'étanchéité (11), ce couvercle (10) comportant une trappe (13, 14) au droit de chaque compartiment (8, 9).

## Claims

1. Grease separator, of the type comprising a tank (1) which delimits two successive compartments (8, 9), respectively de-sludging compartment and separating compartment, separated by a transverse partition (7), characterized in that the partition (7) is mounted in the tank (1) in a removable manner and comprises a substantially vertical upper part (16) and a lower part (17) which is displaced longitudinally with respect to the upper part (16), thus making it possible, depending on the contents of heavy and light matter in the liquid to be treated, to choose a partition (7) whose shape defines the optimum volume for de-sludging and the optimum area for grease collection.

2. Separator according to Claim 1, characterized in that the lower part (17) of the partition is substantially vertical.

3. Separator according to Claim 1 or 2, characterized in that the lower part (17) of the partition (7) is displaced longitudinally in the downstream direction with respect to the upper part (16) of this partition.

4. Separator according to any one of Claims 1 to 3, characterized in that an approximately horizontal connecting web (18) joins the two parts (16, 17) of the partition (7) together, giving the latter an overall S shape.

5. Separator according to any one of Claims 1 to 4, characterized in that it comprises an oblique transverse deflector (21) which is located in the separating compartment (9), facing the upper edge of the partition (7), and the upper edge of which lies, in the longitudinal direction, between the two parts (16, 17) of the partition (7).

6. Separator according to Claim 5, characterized in that the tank (1) contains a heater (30) arranged in the separating compartment (9), level with the upper part of the deflector (21).

7. Separator, especially according to any one of Claims 1 to 6, characterized in that the tank (1) is fed with liquid to be treated through an inlet opening (23A) of flattened rectangular shape, the area of which is markedly greater than that of the feed pipe to which it is connected.

8. Separator according to Claim 7, characterized in that the de-sludging compartment (8) has no deflector facing the inlet opening (23A).

9. Separator according to any one of Claims 1 to 8, characterized in that the tank is equipped with a cover (10) which is applied, possibly via a telescopic jacking-up device (31) on the upper edge of the walls (4 to 6) of the tank, with interposition of a seal (11), this cover (10) including a hatch (13, 14) in line with each compartment (8, 9).

## Patentansprüche

1. Fettabscheider jener Art, die einen Bottich (1) aufweist, der zwei aufeinanderfolgende Abteile (8, 9) umgrenzt, und zwar ein Klärabteil und ein Abscheideabteil, die durch eine querverlaufende Trennwand (7) getrennt sind, dadurch gekennzeichnet, daß die Trennwand (7) im Bottich (1) abnehmbar angebracht ist, einen oberen, im wesentlichen vertikalen Teil (16) und einen unteren, in Längsrichtung bezüglich des oberen Teiles (16) versetzten Teil (17) aufweist und es demnach entsprechend den Anteilen an schweren und leichten Materialien der zu behandelnden Flüssigkeit gestattet, eine Trennwand (7) zu wählen, deren Form das optimale Klärvolumen und die optimale Sammelflächengröße für Fette festlegt.

2. Abscheider nach Anspruch 1, dadurch gekennzeichnet, daß der untere Teil (17) der Trennwand im wesentlichen vertikal ist.

3. Abscheider nach Anspruch 1 oder 2, dadurch gekennzeichnet, daß der untere Teil (17) der Trennwand (7) in Längsrichtung in Bezug auf den oberen Teil (16) dieser Trennwand stromabwärts versetzt ist.

4. Abscheider nach irgendeinem der Ansprüche 1 bis 3, dadurch gekennzeichnet, daß eine nahezu horizontale Verbindungsabdeckung (18) die beiden Teile (16, 17) der Trennwand (7) verbindet, was dieser eine insgesamt S-förmige Gestalt verleiht.

5. Abscheider nach irgendeinem der Ansprüche 1 bis 4, dadurch gekennzeichnet, daß er einen schrägen, querverlaufenden Abweiser (21) aufweist, der im Abscheideabteil (9) dem oberen Rand der Trennwand (7) gegenüberliegend angeordnet ist und dessen oberer Rand sich in Längsrichtung zwischen den beiden Teilen (16, 17) der Trennwand (7) befindet.

6. Abscheider nach Anspruch 5, dadurch gekennzeichnet, daß der Bottich (1) ein Heizorgan (30) enthält, das im Abscheideabteil (9) in Höhe des oberen Teils des Abweisers (21) angeordnet ist.

7. Abscheider insbesondere nach einem der Ansprüche 1 bis 6, dadurch gekennzeichnet, daß der Bottich (1) mit zu behandelnder Flüssigkeit über eine Eintrittsöffnung (23A) in Form eines abgeflachten Rechtecks hinweg gespeist ist, deren Flächengröße deutlich über der des Einspeiserohres liegt, das hieran angeschlossen ist.

8. Abscheider nach Anspruch 7, dadurch gekennzeichnet, daß das Klärabteil (8) gegenüber der Eintrittsöffnung (23A) keinen Abweiser aufweist.

9. Abscheider nach irgendeinem der Ansprüche 1 bis 8, dadurch gekennzeichnet, daß der Bottich mit einem Deckel (10) ausgestattet ist, der, gegebenenfalls unter Zwischenschaltung eines teleskopartigen Aufsatzes (31), auf der oberen Kante der Wände (4 bis 6) des Bottichs unter Zwischenanordnung einer Dichtung (11) aufsitzt, wobei dieser Deckel (10) eine Klappe (13, 14) in Ausrichtung auf jedes Abteil (8, 9) aufweist.
